# EUROPÄISCHE PATENTSCHRIFT

(11) **EP 4 229 749 B1**
(45) Veröffentlichungstag und Bekanntmachung des Hinweises auf die Patenterteilung: **27.05.2026**
(21) Anmeldenummer: 21793930.5
(22) Anmeldetag: 15.10.2021
(51) Int. Cl.: H02S 20/20, F24S 25/10, H02S 20/10, H02S 20/22

(54) **SOLARMODUL MIT FREISTEHENDEN SOLARMODULLAMELLEN UND VERFAHREN ZU DESSEN HERSTELLUNG**
SOLAR PANEL HAVING SELF-SUPPORTING SOLAR PANEL LAMELLAE, AND METHOD FOR PRODUCING THE SOLAR PANEL
MODULE SOLAIRE À LAMELLES AUTOPORTANTES ET SON PROCÉDÉ DE FABRICATION

(30) Priorität: 16.10.2020 CH 13372020
(43) Veröffentlichungstag der Anmeldung: 23.08.2023
(73) Patentinhaber: Enecolo AG, 8617 Mönchaltorf (CH)
(72) Erfinder: TOGGWEILER, Peter, 8617 Mönchaltdorf (CH)
(74) Vertreter: Frei Patent Attorneys
(86) Internationale Anmeldenummer: PCT/EP2021/078686
(87) Internationale Veröffentlichungsnummer: WO 2022/079283

(56) Entgegenhaltungen:
- JP-U- 3 222 991
- KR-B1- 102 138 744
- US-A- 5 538 563
- US-A1- 2015 162 867
- US-A1- 2016 141 437
- US-A1- 2020 153 380

## Beschreibung

Die Erfindung ist auf dem Gebiet der Solartechnik, insbesondere der Photovoltaik, angeordnet und betrifft ein Solarmodul und ein Verfahren zur Herstellung eines Solarmoduls.

Im Zuge einer Neuausrichtung der Energiepolitik in vielen Ländern ist ein vermehrter Einsatz von Solarmodulen zur Energieerzeugung zu erwarten. In Anbetracht der Menge an Energie, die durch umweltfreundliche Techniken wie beispielsweise der Photovoltaik in naher Zukunft gewonnen werden muss, um den Wegfall der momentan noch durch weniger umweltfreundliche oder von der Gesellschaft nicht mehr akzeptierte Techniken der Energieerzeugung zu ersetzen, ist damit zu rechnen, dass Solarmodule in Zukunft noch mehr in Siedlungs- und Erholungsgebieten zum Einsatz kommen. Insbesondere ist damit zu rechnen, dass die Solarmodule nicht mehr nur an kaum einsehbaren Orten, beispielsweise auf Dächern von Objekten in Siedlungs- und Erholungsgebieten zum Einsatz kommen, sondern vermehrt auch an Fassaden, tieferliegenden Dächern, Balkonen etc., das heisst in unmittelbarer Umgebung der Bevölkerung. Dies erfordert den Einsatz von Solarmodulen, die auf einfache aber immer noch sichere Weise an Objekten in Siedlungs- und Erholungsgebieten angebracht werden können. Ferner müssen die Solarmodule derart sein, dass sie von der Bevölkerung nicht oder zumindest als nicht störend wahrgenommen werden. Dies stellt Anforderungen an das Erscheinungsbild und damit die Konstruktion der Solarmodule aber auch an deren Lichtmanagement, beispielsweise deren Blendwirkung oder Verdunklungseffekte, wie Schattenwurf, Teil- oder Vollverschattung.

Aus dem Stand der Technik sind verschiedene Solarmodule und ein oder eine Vielzahl von Solarmodulen umfassende Photovoltaik-Systeme, insbesondere Photovoltaikanlagen und Solarstromanlagen, bekannt, die für einen Einsatz an gut wahrnehmbaren Flächen in Siedlungs- und Erholungsgebieten in Frage kommen.

Beispielsweise lehrt US 2014/0116497 A1 eine Fensterabdeckung zur Montage in einem Innenraum. Die Fensterabdeckung weist einen Rahmen auf, in dem ein beweglicher Querträger angebracht ist, der Solarzellen aufweist. Der Querträger kann beispielsweise als Lamelle oder flexible Solarzelle realisiert sein.

US 2014/0007528 A1 offenbart eine Solarstromanlage, die an einem Baukörper, beispielsweise einem Ziegelstein, angebracht werden kann. Die Solarstromanlage umfasst ein Solarpanel, das auf einem Träger angebracht ist. Der Träger ermöglicht das Anbringen des Solarpanels am Baukörper, wobei das Solarpanel nach dem Anbringen der Solarstromanlage am Baukörper unter einem Winkel zu einer Oberfläche des Baukörpers verläuft.

US 2019/0386606 A1 zeigt eine Art Sonnensegel, das ausgefahren und wieder eingezogen werden kann. Das Sonnensegel umfasst eine Vielzahl von Solarpanels, die über einen Mechanismus aus einer Anordnung, in der sie nahe beisammen liegen, in eine Anordnung, in der sie voneinander weiter beabstandet sind und so eine grössere Fläche beschatten, reversibel übergeführt werden können.

WO 2020/077377 A1 zeigt eine Vorrichtung zur vertikalen Anbringung an einer Wand, insbesondere an einer Lärmschutzwand. Die Vorrichtung umfasst einen Rahmen, darin angeordnete Lamellen und Solarmodule. Die Lamellen sind als längliche Rahmenverstrebungen ausgebildet und bilden die Tragestruktur für die Solarmodule, wobei die Lamellen derart angeordnet sind, dass die Solarmodule in einem schrägen Winkel in Bezug auf eine Rahmenebene angeordnet sind. Ziel der Vorrichtung ist, die Wand hinter der Vorrichtung, die für ankommenden Schall direkt erreichbar ist, so wenig wie möglich zu verkleinern, um die wirksame Schallabsorptionsoberfläche der Wand so gross wie möglich zu halten.

DE 202011101835 U1 offenbart eine Photovoltaikanlage mit mehreren Photovoltaikmodulen und einer Montageeinheit, wobei die Photovoltaikmodule mittels der Montageeinheit in schräger Ausrichtung an einem Gebäude montierbar sind. Die Montageeinheit weist in einer vertikalen Ebene verlaufende Stützelemente auf, an welchen die Photovoltaikmodule übereinander in einem schrägen Winkel zur Vertikalen befestigbar sind. Dazu weisen die Photovoltaikmodule einen Rahmen aus Aluminiumprofilen auf, der dreieckige Seitenteil umfasst, welche als Verbindungselement zur Montageinheit dienen.

US 2011/0056534 A1 lehrt ein semitransparentes Solarmodul, bei welchem Photovoltaik-Zellen auf einem flexiblen Substrat angebracht sind. Das flexible Substrat weist erste planare Teile, auf denen die Photovoltaik-Zellen angebracht sind, und zweite planare Teile auf. Die zweiten planaren Teile bilden eine Art Rahmen mit lichtdurchlässigen Öffnungen und die ersten planaren Teile ragen aus einer durch den Rahmen aufgespannten Ebene heraus.

US 2016/0141437 A1 offenbart ein Photovoltaik-System das mindestens zwei bificale Solarmodule, die in einer Modulhalterung angeordnet sind, und einen Reflektor aufweist. Die Solarmodule sind vertikal und zueinander parallele angeordnet. Der Reflektor ist zwischen den beiden Solarmodulen angeordnet. Durch diese Anordnung der Solarmodule und des Reflektors soll die Dauer, in welcher das Photovoltaik-System im Tagesverlauf viel Strom erzeugt, erhöht werden.

US 5538563 A zeigt ein System, das demjenigen von US 2016/0141437 A1 sehr ähnlich ist, mit dem Unterschied, dass US 5538563 A eine Ausführungsform zeigt, bei welchem die Solarmodule horizontal angeordnet sind.

US 2020/0153380 A1, WO 2020/213613 A1 und KR 10-2138744 B1 zeigen Photovoltaik-Systeme, die eine Haltestruktur für Solarmodule aufweisen, wobei die Haltestruktur aus horizontal und vertikal angeordneten Profilen gebildet wird, die rechteckige Befestigungsgebiete bilden, in welche jeweils ein Solarmodul eingebracht und fixiert wird. Die Fixierung umfasst das Anbringen von Halteelementen an zwei gegenüberliegenden Seiten des Rahmens eines eingebrachten Solarmoduls. Die Haltestruktur ist dazu ausgelegt, die eingebrachten Solarmodule vertikal zu positionieren. US 2020/0153380 A1 zeigt ferner eine Ausführungsform eines Photovoltaik-Systems mit genannter Haltestruktur, bei welchem ein eingebrachtes Solarmodul nur an derjenigen Seite des Rahmens an der Haltestruktur fixiert ist, die an demjenigen horizontalen Profil anliegt, das das Befestigungsgebiet gegen oben hin begrenzt. Dieses horizontale Profil ist ferner derart eingerichtet, dass das Solarmodul bei anliegender Windlast aus der Ebene der Haltestruktur auslenken kann.

US 2015/0162867 A1 zeigt ein PV-System, das eine Haltevorrichtung aufweist, die zur Befestigung eines Solarmoduls an einer Befestigungsfläche eines Trägers eingerichtet ist, wobei sich die Befestigungsfläche entlang einer vertikalen Achse erstreckt. Die Haltevorrichtung ist derart ausgelegt, dass das Solarmodul vertikal ausgerichtet. Ferner ist die Haltevorrichtung derart ausgelegt, dass das Solarmodul nur am oder nahe derjenigen Seite seines umlaufenden Rahmens über die Haltevorrichtung an der Befestigungsfläche befestigt wird, die der Befestigungsfläche angrenzend ist, wobei eine Vielzahl der besagten Haltevorrichtungen zum Einsatz kommen, die entlang der besagten Seite verteilt sind. In einer Ausführungsform wird eine Mehrzahl von Solarmodulen in einer Linie entlang der vertikalen Achse, entlang welcher sich die Befestigungsfläche erstreckt, mit Hilfe einer Vielzahl von Haltevorrichtung angeordnet. In einer anderen Ausführungsform ist die Haltevorrichtung derart ausgelegt, dass das Solarmodul um eine vertikale Achse drehen kann, wenn eine Kraft auf einer Flachseite des Solarmoduls anliegt, und dass das Solarmodul wieder in seine ursprüngliche Position zurückkehrt, sobald die Kraft nicht mehr anliegt.

Solarmodule und ein oder mehrere Solarmodule umfassende Photovoltaik-Systeme gemäss dem Stand der Technik haben den Nachteil, dass sie den Anforderungen für einen Einsatz in unmittelbarer Umgebung der Bevölkerung, beispielsweise wegen ihren optischen Eigenschaften, ihrer Stabilität, Komplexität oder der mechanischen Belastung des Objekts, an dem das Solarmodul oder Photovoltaik-System angebracht wird, nur bedingt geeignet sind.

Es ist eine Aufgabe der Erfindung, ein Solarmodul zur Verfügung zu stellen, das Nachteile von Solarmodulen gemäss dem Stand der Technik, insbesondere mit Blick auf einen Einsatz in unmittelbarer Umgebung der Bevölkerung, überwindet.

Insbesondere ist es eine Aufgabe der Erfindung, ein Solarmodul zur Verfügung zu stellen, das eine Alternative zu Solarmodulen mit flächigem, glattem Erscheinungsbild gemäss dem Stand der Technik bietet.

Beispielsweise ist es eine Aufgabe der Erfindung, ein Solarmodul zur Verfügung zu stellen, das eine geringere Windlast, insbesondere eine geringere vertikale Windlast, aufweist, als Solarmodule gemäss dem Stand der Technik. Dies ist beispielsweise bei Anwendungen auf Dächern, die nur mit einer geringen Zusatzlast beaufschlagt werden dürfen, essentiell.

Beispielsweise ist es eine Aufgabe der Erfindung, ein Solarmodul zur Verfügung zu stellen, dessen optische Eigenschaften, wie beispielsweise Verschattung oder Blendwirkung, und/oder dessen Konstruktion für einen Einsatz in unmittelbarer Umgebung der Bevölkerung geeignet ist.

Ferner ist es eine Aufgabe der Erfindung, ein Verfahren zur Herstellung eines entsprechenden Solarmoduls zur Verfügung zu stellen.

Der Gegenstand der vorliegenden Erfindung ist in den Ansprüchen 1 und 10 definiert.

Ein erfindungsgemässes Solarmodul umfasst ein Grundelement, eine Haltevorrichtung und mindestens zwei Solarmodullamellen.

Die Solarmodullamelle kann eine Solarmodullamelle sein, wie sie nach dem Laminieren eines Deckelements (beispielsweise eine Glas- oder Kunststoffscheibe), einer Solarzelle oder einer Schicht von Solarzellen und eines Rückelements (beispielsweise Glas- oder Kunststoffscheibe oder Kunststoffverbundfolie) entsteht. Die Solarmodullamelle kann also ein Solarmodullaminat sein. Das Solarmodullaminat kann an seinen Seitenflächen einen Rahmen aufweisen.

Die Solarmodullamelle ist kein einsatzbereites Solarmodul. Das heisst, die Solarmodullamelle kann nicht in der für Solarmodule üblichen Weise zur Stromerzeugung verwendet werden. Insbesondere verfügt die Solarmodullamelle über keine für einsatzbereite Solarmodule übliche elektrische Anschlusseinheiten, wie beispielweise Stecker oder Anschlussdosen. Vielmehr ist die Solarmodullamelle eine Komponente für ein erfindungsgemässes Solarmodul, wobei erst das die Solarmodullamelle, in der Regel die Solarmodullamellen, umfassende Solarmodul ein einsatzbereites Solarmodul ist.

Eine elektrische Verbindung der Solarmodullamelle kann zum Beispiel einen Leiter, beispielsweise einem Flachbandleiter, aufweisen, welcher über den Rand der Solarmodullamelle hinausragt. Der so erzeugte, offen liegende elektrische Verbindungspunkt kann dann bei der Herstellung des Solarmoduls benutz werden, um die einzelnen Solarmodullamellen elektrisch miteinander zu verbinden.

Beispielsweise ragt der Leiter an einer Stelle der Solarmodullamelle über den Rand hinaus, die auf die Anordnung eines einsprechenden Leiters an der Haltevorrichtung oder am Grundelement abgestimmt ist, so dass bei korrekter Positionierung der Solarmodullamelle in der Haltevorrichtung, beziehungsweise im Grundelement, eine leitende Verbindung zwischen dem Solarmodullamelle-seitigen Leiter und dem Haltevorrichtung-seitigen Leiter, beziehungsweise dem Grundelement-seitigen Leiter, entsteht. In anderen Worten, ragt der Leiter an einer bestimmten Stelle über den Rand hinaus. Die bestimmte Stelle ist insbesondere in einem Bereich, in dem die Solarmodullamelle mit der Haltevorrichtung verbunden ist oder wird.

Mehrere, das heisst mindestens zwei, elektrische Verbindungen der Solarmodullamelle können in der eben beschriebenen Weise realisiert sein.

Es können alle elektrischen Verbindungen der Solarmodullamelle in der eben beschriebenen Weise realisiert sein.

Das Solarmodul, beispielsweise das so gefertigte Solarmodul, weist eine Anschlussdose und/oder einen Stecker auf, insbesondere eine für Solarmodule handelsübliche Anschlussdose und/oder einen für Solarmodule handelsüblichen Stecker.

Die Solarmodullamelle weist eine erste Flachseite, die in vielen Ausführungsformen durch das Deckelement gegeben ist, eine zweite Flachseite, die in vielen Ausführungsformen durch das Rückelement gegeben ist, und eine unter einem Winkel zur ersten und zweiten Flachseite verlaufende Querseite auf.

Die Querseite ist in der Regel auf einen Bereich zwischen einem Randbereich der ersten Flachseite und einem Randbereich der zweiten Flachseite begrenzt.

Die Form der Solarmodullamelle kann beispielsweise durch ihre geometrische Grundform (Grundriss) und die Tiefe (Dicke, Stärke), über welche sich die Grundform erstreckt, gegeben sein. Wie bei 3D Objekten üblich lässt sich somit die Form der Solarmodullamelle durch die Nennung der Grundform sowie deren maximale Ausdehnung entlang dreier senkrecht zueinanderstehender Richtungen, nämlich der Länge L, Breite B und Tiefe T wiedergeben. Unter Verwendung dieser Definition der Form der Solarmodullamelle umfasst die Querseite alle Flächen der Solarmodullamelle, die eine aussenliegenden Abschluss der Solarmodullamelle bilden und so angeordnet sind, dass sie eine Komponente entlang der Tiefe der Solarmodullamelle umfassen.

Die Grundform und deren Ausdehnung (Dimension) kann vom Einsatzgebiet des erfindungsgemässen Solarmoduls abhängen.

Die Solarmodullamelle kann beispielsweise eine rechteckige Grundform haben. Es ist aber auch denkbar, dass - beispielsweise aus ästhetischen Gründen oder weil das Solarmodul an einer gebogenen oder gewinkelten Fläche zum Einsatz kommt - die Grundform von einer rechteckigen Grundform verschieden ist.

Die Länge der Grundform, insbesondere der rechteckigen Grundform, kann in einem Bereich zwischen 20 cm und 5 m, vorzugsweise in einem Bereich zwischen 30 cm und 2 oder 1 m liegen. Die Breite der rechteckigen Grundform kann in einem Bereich zwischen 2 cm und 1 m, vorzugsweise in einem Bereich zwischen 5 cm und 30 oder 20 cm liegen. Die Tiefe der Solarmodullamelle ist in der Regel zwischen 3 mm und 5 cm, vorzugsweise zwischen 3 mm und 2 oder 1 cm. Bei ersten Konzeptstudien wurden Solarmodullamellen mit rechteckiger Grundform und Ausdehnungen (LxBxT) von ca. 850x170x6 mm und 85 x90x6 mm verwendet.

In vielen Ausführungsformen ist die Solarmodullamelle ein im Wesentlichen zweidimensionales Objekt, das heisst die Tiefe (Dicke) der Solarmodullamelle ist wesentlich kleiner als die Abmasse der Grundform. Insbesondere kann die Tiefe der Grundform im Wesentlichen durch das Deckelement, die Solarzellen, das Rückelement und Verbindungsschichten gegeben sein. In Ausführungsformen, in welchen die Solarmodullamelle einen Rahmen aufweist, weist dieser Rahmen in der Regel kein Element entlang der Tiefe der Grundform auf, die dem im Wesentlichen zweidimensionalen Charakter der Solarmodullamelle abträglich ist. Insbesondere weist der Rahmen kein oder nur lokal ein Element auf, das die Dicke der Solarmodullamelle um mehr als das Doppelte der Dicke des Materials, das den Rahmen bildet, vergrössert, wobei diese Vergrösserung durch das auf dem Deckelement und dem Rückelement angeordneten Material des Rahmens verursacht wird.

Ein Fortsatz, beispielsweise zur Führung oder Fixierung, ist ein Beispiel eines Elements des Rahmens, das lokal entlang der Dicke der Solarmodullamelle aus dem Rahmen herausragen kann. «Lokal» bedeutet in diesem Zusammenhang, dass das Element derart ist, dass es den zweidimensionalen Charakter der Solarmodullamelle nicht beeinflusst.

Das Grundelement ist dasjenige Element des Solarmoduls, das bei zweckmässig an einem Objekt montiertem Solarmodul mit dem Objekt in Kontakt steht und über das das Solarmodul am Objekt fixiert ist. Entsprechend weist das Grundelement eine Vorderseite und eine Rückseite auf, wobei die Rückseite diejenige Seite des Grundelements ist, die bei montiertem Solarmodul dem Objekt, an welchem das Solarmodul montiert ist, zugewandt ist.

Die Haltevorrichtung kann ein ursprünglich separates Element oder irgendein Element, irgendeine Formgebung und/oder irgendein Bestandteil des Grundelements und/oder der Solarmodullamelle sein, das/die/der dazu eingerichtet ist, die Solarmodullamelle starr mit dem Grundelement zu verbinden. Insbesondere verbindet die Haltevorrichtung die Solarmodullamelle im für den Einsatz des Solarmoduls vorgesehen Zustand starr mit dem Grundelement. "Starr" bedeutet, dass die Solarmodullamelle in einer fixen, das heisst nicht veränderbaren, unbeweglichen, relativen Position zum Grundelement gehalten wird.

Für die starre Verbindung zwischen Solarmodullamelle und Grundelement ist spätestens im für den Einsatz vorgesehenen Zustand des Solarmoduls die Haltevorrichtung starr mit dem Grundelement verbunden und die Solarmodullamelle starr mit der Haltevorrichtung verbunden.

Die Haltevorrichtung ist spätestens im für den Einsatz vorgesehenen Zustand des Solarmoduls ebenfalls starr, das heisst nicht verformbar.

Bei einem erfindungsgemässen Solarmodul ist die Solarmodullamelle spätestens im für den Einsatz vorgesehenen Zustand des Solarmoduls (i) nur in einem Bereich der Querseite oder (ii) nur in einem Bereich der Querseite und in einem an den Bereich der Querseite unmittelbar angrenzenden Bereich der ersten und/oder zweiten Flachseite oder (iii) nur in einem an den Bereich der Querseite unmittelbar angrenzenden Bereich der ersten und/oder zweiten Flachseite mit der Haltevorrichtung verbunden.

"Nur in einem Bereich der Querseite", "nur in einem Bereich der Querseite und in einem an den Bereich der Querseite unmittelbar angrenzenden Bereich der ersten und/oder zweiten Flachseite", beziehungsweise "nur in einem an den Bereich der Querseite unmittelbar angrenzenden Bereich der ersten und/oder zweiten Flachseite" bedeutet, dass die Verbindung zwischen Solarmodullamelle und Haltevorrichtung auf den genannten Bereich beziehungsweise die genannten Bereiche der Solarmodullamelle beschränkt ist. Dabei kann die Verbindung über den gesamten genannten Bereich, beziehungsweise Bereiche, oder über einen oder mehrere Teilbereiche desselben, beziehungsweise derselben, erfolgen.

Entsprechend kann eine Haltevorrichtung, die eine Solarmodullamelle starr mit dem Grundelement verbindet, aus mehreren Teilen bestehen. Die Teile können im Solarmodul versetzt, insbesondere entlang des Bereichs der Querseite versetzt, angeordnet sein.

Der Bereich der Querseite ist insbesondere ein Teilbereich der die Solarmodullamelle abschliessenden, umlaufenden Querseite der Solarmodullamelle.

In einer Ausführungsform umfasst der Bereich der Querseite keine Bereiche der Querseite, die unter einem Winkel grösser 10°, insbesondere grösser als 20°, 30°, 40° oder 45° verlaufen. Beispielsweise umfasst der Bereich der Querseite keine Bereiche, die unter 90° zueinander verlaufen oder die sich gegenüberliegen (Winkel von 180°).

In einer Ausführungsform erstreckt sich der Bereich der Querseite entlang einer einzigen Achse, wobei der Bereich der Querseite lokal von dieser Achse abweichen kann, beispielsweise wenn die Solarmodullamelle eine geschwungene Grundform aufweist.

Beispielsweise kann die Solarmodullamelle eine rechteckige Grundform aufweisen. Eine solche weist vier Querseiten auf, die zusammen die abschliessende, umlaufende Querseite bilden. In diesem Fall kann der Bereich der Querseite, in welchem die Solarmodullamelle im für den Einsatz vorgesehenen Zustand des Solarmoduls mit der Haltevorrichtung verbunden ist, eine der vier Querseiten sein. Allerdings wird sich der Bereich, in welchem die Solarmodullamelle im für den Einsatz vorgesehenen Zustand des Solarmoduls mit der Haltevorrichtung verbunden ist, in vielen Ausführungsformen etwas in den an besagte Querseite angrenzenden Bereich der angrenzenden Querseiten und/oder in den an besagte Querseite angrenzenden Bereich der ersten und/oder zweiten Flachsseite erstrecken.

In Ausführungsformen, beispielsweise aber nicht nur mit rechteckiger Grundform der Solarmodullamelle, kann die Verbindung zur Haltevorrichtung nur an einem oder mehreren der genannten angrenzenden Bereiche realisiert sein. Insbesondere solche Ausführungsformen sind unter der Alternative "(iii) nur in einem an den Bereich der Querseite unmittelbar angrenzenden Bereich der ersten und/oder zweiten Flachseite" subsumiert.

Der Teilbereich der die Solarmodullamelle abschliessenden, umlaufenden Querseite, der den bei der Verbindung zur Haltevorrichtung direkt oder indirekt involvierten Bereich der Querseite ausmacht, macht insbesondere einen Bruchteil der gesamten die Solarmodullamelle abschliessenden, umlaufenden Querseite aus, beispielsweise weniger als 40% oder weniger als 30%. Der Anteil an besagtem Teilbereich kann von der Grundform der Solarmodullamelle abhängen. Bei einer rechteckigen Grundform mit Länge L und Breite B kann er in der Grössenordnung von L/(2L+2B) sein. Bei einer als gleichschenkliges Dreieck realisierten Grundform kann der Anteil in der Grössenordnung von c/(2a+c) sein, wenn die Schenkel die Länge a und die Basis die Länge c haben.

Der an den Bereich der Querseite unmittelbar angrenzende Bereich der ersten und/oder zweiten Flachseite, der bei der Verbindung zwischen Solarmodullamelle und Haltevorrichtung involviert sein kann, erstreckt sich insbesondere nur über einen Bruchteil der Ausdehnung der ersten Flachseite und/oder der zweiten Flachseite entlang einer von besagtem Bereich der Querseite weglaufenden, insbesondere unter einem rechten Winkel weglaufenden, Richtung, beispielsweise weniger als 25%, bevorzugt weniger als 15% oder weniger als 10%. In absoluten Werten kann sich die Ausdehnung in besagte Richtung um weniger als 5 cm, 3 cm oder 2 cm, insbesondere um 1 cm oder weniger erstrecken.

Für alternative Grundformen ergibt sich die Bedeutung der Begriffe "Bereich der Querseite" und "unmittelbar angrenzender Bereich" sinngemäss.

In einer Ausführungsform handelt es sich bei der Lagerung der Solarmodullamelle in oder an der Haltevorrichtung um eine Linienlagerung.

Bei einem erfindungsgemässen Solarmodul ist die Solarmodullamelle spätestens im für den Einsatz vorgesehenen Zustand des Solarmoduls derart relativ zum Grundelement angeordnet, dass sie freistehend ist. In anderen Worten, ist die Solarmodullamelle freistehend zu einer Fläche des Grundelements angeordnet, wobei die Fläche eine auf der Vorderseite angeordneten Oberfläche des Grundelements ist oder eine durch die Vorderseite des Grundelements definierte, allenfalls gedachte, Fläche ist. Insbesondere ist die Solarmodullamelle unter einem von Null verschiedenen Winkel relativ zur besagten Fläche des Grundelements angeordnet, das heisst fixiert.

Insbesondere steht die Solarmodullamelle spätestens im für den Einsatz vorgesehenen Zustand des Solarmoduls nur im Bereich der Querseite und/oder im Bereich der ersten Flachseite, der unmittelbar an den Bereich der Querseite angrenzt, und/oder im Bereich der zweiten Flachseite, der unmittelbar an den Bereich der Querseite angrenzt, mit der Haltevorrichtung und über die Haltevorrichtung mit dem Grundelement in lasttragendem Kontakt. In anderen Worten: Abgesehen von den genannten Bereichen gibt es keine direkte oder indirekte lasttragende Verbindung zwischen der Solarmodullamelle und dem Grundelement.

Diese Definition von "freistehend" schliesst nicht aus, dass es weitere Verbindungen zwischen der Solarmodullamelle und dem Grundelement und/oder zwischen der Solarmodullamelle und der Haltevorrichtung gibt, die nicht im Bereich der Querseite und/oder im Bereich der ersten Flachseite, der unmittelbar an den Bereich der Querseite angrenzt, und/oder im Bereich der zweiten Flachseite, der unmittelbar an den Bereich der Querseite angrenzt, vorhanden sind. Diese weiteren Verbindungen sind dann aber nicht lasttragend. Ein Element der elektrischen Verkabelung kann ein Beispiel einer solchen, nicht lasttragenden Verbindung sein.

In einer Ausführungsform sind die mechanischen Eigenschaften des Solarmoduls einzig durch die mechanischen Eigenschaften der Solarmodullamelle, der Haltevorrichtung, dem Grundelement sowie der unmittelbaren Verbindung zwischen Solarmodullamelle und Haltevorrichtung und der unmittelbaren Verbindung zwischen Haltevorrichtung und Grundelement gegeben, wobei die unmittelbare Verbindung zwischen der Solarmodullamelle und der Haltevorrichtung spätestens im für den Einsatz vorgesehenen Zustand des Solarmoduls nur in einem Bereich der Querseite und/oder in einem an den Bereich der Querseite unmittelbar angrenzenden Bereich der ersten und/oder zweiten Flachseite mit der Haltevorrichtung geschieht. "Unmittelbar" bedeutet in diesem Zusammenhang, dass abgesehen von den drei genannten Elementen (Solarmodullamelle, Haltevorrichtung, Grundelement) und den direkten Verbindungen zwischen Solarmodullamelle und Haltevorrichtung sowie Haltevorrichtung und Grundelement kein weiteres Element und keine weitere Verbindung vorhanden sind, die die mechanischen Eigenschaften des Solarmoduls beeinflussen.

Grundelement, Solarmodullamelle und Haltevorrichtung weisen eine Steifheit auf, die die genannte freistehende Anordnung der Solarmodullamelle zulassen. Insbesondere sind das Grundelement und die Solarmodullamelle steif, das heisst weder flexibel noch elastisch verformbar. Insbesondere kann die Solarmodullamelle eines der folgenden Elemente aufweisen:
- Ein Deckelement, das eine Steifheit aufweist, die eine Verformung der Solarmodullamelle durch ihr Eigengewicht, insbesondere im Gebiet der Verbindung zur Haltevorrichtung, verhindert.
- Ein Rückelement, das eine Steifheit aufweist, die eine Verformung der Solarmodullamelle durch ihr Eigengewicht, insbesondere im Gebiet der Verbindung zur Haltevorrichtung, verhindert.
- Ein Deckelement und ein Rückelement, deren kumulierte Steifheit derart ist, dass eine Verformung der Solarmodullamelle durch ihr Eigengewicht, insbesondere im Gebiet der Verbindung zur Haltevorrichtung, verhindert wird.
- Ein Rahmenelement zumindest im Bereich der Querseite, die bei der Verbindung zur Haltevorrichtung involviert ist.
- Ein zumindest im Bereich der Querseite einlaminiertes Profil zur Befestigung der Solarmodullamelle an der Haltevorrichtung.

In vielen Ausführungsformen ist die Steifheit der Solarmodullamelle derart, dass eine Verformung der Solarmodullamelle, insbesondere im Gebiet der Verbindung zur Haltevorrichtung, nicht nur durch ihr Eigengewicht sondern auch bei zusätzlicher Last verhindert wird. Diese zusätzliche Last kann beispielsweise dadurch zustande kommen, dass das Solarmodul in Reichweite von Teilen der Bevölkerung angebracht werden kann und/oder dass es exponiert ist und beispielsweise zeitweise durch Schnee oder Blätter bedeckt sein kann.

In vielen Ausführungsformen wird auf Elemente, die die Solarmodullamelle tragen, beispielsweise Winkel zwischen Grundelement und Solarmodullamelle oder Auflageflächen der Solarmodullamelle, verzichtetet. Deshalb können die optischen Eigenschaften des Solarmoduls in erster Linie durch die optischen Eigenschaften der Solarmodullamelle und der Grundkonstruktion bestimmt sein.

Auch kann durch eine Konstruktion des Solarmoduls, in der auf Elemente, die die Solarmodullamelle tragen, beispielsweise Winkel zwischen Grundelement und Solarmodullamelle oder Auflageflächen der Solarmodullamelle, verzichtetet wird, in der das Grundelement durch profilartig ausgebildete Elemente, beispielsweise wie nachfolgend beschrieben, gebildet ist, in der Auflageflächen für Ablagerungen wie beispielsweise Blätter oder Schnee minimiert worden sind und/oder in der solche Auflagefläche unter einem Winkel zum Grundelement verlaufen, der in einem am Objekt montierten Zustand des Solarmoduls ein Abrutschen der Ablagerungen begünstigt, die Last, die ein Solarmodul oder ein Photovoltaik-System auf das Objekt erzeugt, an dem es angebracht ist, im Vergleich zu Solarmodulen und Photovoltaik-Systemen gemäss dem Stand der Technik reduziert werden. Diese Last ist nicht nur durch das Gewicht des Solarmoduls oder Photovoltaik-Systems gegeben, sondern auch durch zusätzliche, im Einsatz auftretende Lasten, wie beispielsweise Windlast oder die Last durch Ablagerungen, wie beispielsweise Blätter oder Schnee.

Insbesondere die optischen Eigenschaften des Solarmoduls können für einen Einsatz in unmittelbarer Umgebung der Bevölkerung weiter verbessert werden, indem mindestens eines der folgenden Merkmale im Solarmodul realisiert ist:
- Die Solarmodullamelle umfasst eine bificale Solarzelle. Insbesondere sind die in der Solarmodullamelle verwendeten Solarzellen bificale Solarzellen.

Die Solarmodullamelle kann eine Glas-Glas Solarmodullamelle sein.
- Die Solarmodullamelle umfasst keinen umlaufenden Rahmen.

Die Solarmodullamelle kann aber - wie erwähnt - ein Rahmenelement im Bereich der Querseite aufweisen, der bei der Verbindung zur Haltevorrichtung involviert ist. Alternativ kann die Solarmodullamelle - wie erwähnt - zumindest in besagtem Bereich ein einlaminiertes Profil zur Befestigung der Solarmodullamelle an der Haltevorrichtung aufweisen.
- Das Grundelement umfasst nur Elemente, die profilartig ausgebildet sind. In anderen Worten umfasst das Grundelement nur Elemente, die sich entlang einer Längsachse erstrecken und deren Ausdehnung in alle Richtungen radial zur Längsachse wesentlich kleiner ist als die Ausdehnung entlang der Längsachse. Balken, Träger, Konstruktionsprofile, Rohre etc. sind Beispiele von profilartig ausgebildeten Elementen. Profilartige Elemente sind insbesondere von plattenartigen Elementen zu unterscheiden. Plattenartige Elemente weisen in eine zu einer Längsachse radialen Richtung eine Ausdehnung auf, die nicht wesentlich kleiner ist als die Ausdehnung entlang der Längsachse.

Durch die Realisierung des Grundelements unter Verwendung von profilartig ausgebildeten Elementen ist das Grundelement für elektromagnetische Strahlung im sichtbaren Bereich weitestgehend transparent.

In Ausführungsformen weist das Grundelement einen Verbindungsträger und das Solarmodul ein Tragprofil auf. Verbindungsträger und Tragprofil sind profilartig ausgebildete Elemente.

Spätestens im für den Einsatz vorgesehenen Zustand des Solarmoduls ist bei diesen Ausführungsformen die Haltevorrichtung zur starren Verbindung einer Solarmodullamelle am Grundelement am Tragprofil angeordnet.

Das Tragprofil kann ursprünglich Teil des Grundelements, Teil der Solarmodullamelle oder eine profilartig realisierte Haltevorrichtung sein.

Im für den Einsatz vorgesehenen Zustand des Solarmoduls wird das Tragprofil in der Regel dem Grundelement zugeordnet. Das heisst, das Grundelement umfasst das oder die Tragprofile und das oder die Verbindungsträger.

**In** einer Ausführungsform besteht das Grundelement aus dem oder den Tragprofilen und dem oder den Verbindungsträgern.

Der Verbindungsträger oder zumindest ein Verbindungsträger, falls das Solarmodul mehrere Verbindungsträger aufweist, ist eingerichtet, das Tragprofil oder die Tragprofile am Objekt zu befestigen.

Falls das Solarmodul mehrere Tragprofile aufweist, was in der Regel der Fall ist, ist das Verbindungselement eingerichtet, die Tragprofile starr miteinander zu verbinden.

Ein Solarmodul kann mehrere Verbindungsträger aufweisen. Die Anzahl Verbindungsträger kann von der Grösse der Solarmodullamelle, insbesondere dessen Ausdehnung entlang des Bereichs der Querseite, in dem die Solarmodullamelle mit der Haltevorrichtung verbunden ist, abhängen. Die Verbindungsträger können beispielsweise äquidistant angeordnet sein.

Die Verbindungsträger können senkrecht zu besagtem Bereich, beispielsweise äquidistant, angeordnet sein.

In einer Ausführungsform weist das Solarmodul mindestens zwei Solarmodullamellen, mindestens zwei Haltevorrichtungen, ein Grundelement mit mindestens einen Verbindungsträger und mindestens zwei Tragprofile auf. Eine erste Haltevorrichtung hält eine erste Solarmodullamelle und eine zweite Haltevorrichtung hält eine zweite Solarmodullamelle in einer fixen relativen Position zu zueinander und zum Grundelement. Ein erstes Tragprofil umfasst die erste Haltevorrichtung und ein zweites Tragprofil umfasst die zweite Haltevorrichtung. Der Verbindungsträger verbindet das erste und zweite Tragprofil starr miteinander.

Falls das Solarmodul gemäss dieser Ausführungsform mehr als zwei Solarmodullamellen aufweist, was in der Regel der Fall ist, hält eine dritte Haltevorrichtung eine dritte Solarmodullamelle, eine allenfalls vorhandene vierte Haltevorrichtung eine vierte Solarmodullamelle usw. Ein drittes Tragprofil umfasst die dritte Haltevorrichtung, ein viertes Tragprofil umfasst die vierte Haltevorrichtung usw. Der Verbindungsträger verbindet die Tragprofile starr miteinander.

In einer Ausführungsform umfasst das Grundelement einen Rahmen, der einen Innenbereich definiert, in dem spätestens im für den Einsatz vorgesehenen Zustand des Solarmoduls der Bereich der Querseite und/oder der an den Bereich der Querseite unmittelbar angrenzende Bereich der ersten und/oder zweiten Flachseite angeordnet ist/sind, wobei der Innenbereich bis auf eine optional vorhandene Haltevorrichtung, die beispielsweise auf einem Tragprofil angeordnet ist oder als Tragprofile realisiert ist, für elektromagnetische Strahlung im sichtbaren Bereich transparent ist.

Der Rahmen wird durch profilartig ausgebildete Elemente gebildet, insbesondere durch ein oder mehrere Verbindungsträger und/oder ein oder mehrere Tragprofile.

Der Rahmen kann ein geschlossener oder auf mindestens einer Seite offener Rahmen sein.

Alternativ zu einem Grundelement, dass durch profilartig ausgebildete Elemente gebildet wird, kann das Grundelement zumindest ein Gebiet umfassen, das eine durchgehende, geschlossene Oberfläche aufweist, die für elektromagnetische Strahlung im sichtbaren Bereich nicht transparent (intransparent) ist.

Ergänzend kann das Grundelement ein Gebiet umfassen, das für elektromagnetische Strahlung im sichtbaren Bereich transparent ist.

Zumindest ein Teil der optischen Eigenschaften des Solarmoduls können über das Verhältnis zwischen dem intransparenten Gebiet und dem transparenten Gebiet einstellt sein.

Alternativ oder ergänzend kann das Grundelement ein Gebiet umfassen, das für elektromagnetische Strahlung im sichtbaren Bereich semi-transparent ist.

Eines der beiden zuvor als intransparent oder transparent beschriebenen Gebiete kann als semi-transparentes Gebiet ausgelegt sein.

Die Haltevorrichtung kann im intransparenten oder semi-transparenten Gebiet angeordnet sein.

Die Haltevorrichtung kann eine Öffnung aufweisen, die von der Vorderseite des Grundelements zur Rückseite hin durchgehend sein kann. In diesem Fall kann die Oberfläche des Gebiets eine bis auf die Öffnung der Haltevorrichtung durchgehende, geschlossene Oberfläche sein.

In einer Ausführungsform weist das Solarmodul insgesamt eine hohe Lichttransparenz auf.

In einer Ausführungsform weist die Solarmodullamelle einen Rahmen auf, der entlang einer Längskante des Rahmens mit der Haltevorrichtung verbunden ist. In anderen Worten verläuft das Halteprofil der Solarmodullamelle am Grundelement entlang einer Längskante.

Die Längskante des Rahmens kann über dem oben beschriebenen Bereich der Querseite der Solarmodullamelle angeordnet sein.

Ergänzend kann die Haltevorrichtung eine Halteöffnung, beispielsweise eine Halteöffnung wie nachfolgend beschrieben, umfassen, wobei zumindest die Längskante des Rahmens, entlang welcher die Solarmodullamelle mit dem Grundelement verbunden ist, in die Halteöffnung eingeführt ist.

In einer Ausführungsform handelt es sich bei der Verbindung zwischen Solarmodullamelle und Haltevorrichtung um eine Linienverbindung.

In einer Ausführungsform handelt es sich bei der Verbindung zwischen Solarmodullamelle und Haltevorrichtung um Punktverbindungen.

Die Punktverbindungen können beispielsweise entlang mindestens eines der zuvor beschriebenen Bereiche, die an der Verbindung zwischen Solarmodullamelle und Haltevorrichtung involviert sind, angeordnet sein.

Die Punktverbindungen können beispielsweise in Positionen innerhalb des durch den Bereich der Querseite und der unmittelbar angrenzenden Bereiche der ersten und/oder zweiten Flachseite derart angeordnet sein, dass sie sich relativ zu einer Querschnittfläche der Solarmodullamelle gegenüberliegen.

In einer Ausführungsform handelt es sich bei der Verbindung zwischen Solarmodullamelle und Haltevorrichtung um eine flächige Verbindung (Flächenverbindung), wobei die flächige Verbindung auf die zuvor beschriebenen, an der Verbindung zwischen Solarmodullamelle und Haltevorrichtung involvierten Bereiche oder einen Teilbereich derselben beschränkt ist.

Die Linien-, Punkt- oder Flächenverbindung, beziehungsweise Verbindungen, können sich in einen durch die erste und zweite Flachseite sowie die Querseite definierten Innenbereich erstrecken.

Die Linien-, Punkt- oder Flächenverbindung, beziehungsweise Verbindungen, können von aussen an die Solarmodullamelle angreifen.

Die Linien-, Punkt- oder Flächenverbindung, beziehungsweise Verbindungen, können durch eine oder mehrere Haltevorrichtungen realisiert sein.

Die Haltevorrichtung oder die Haltevorrichtungen können ein integraler Bestandteil des Grundelements sein.

Die Haltevorrichtung oder Haltevorrichtungen können ein vom Grundelement und von der Solarmodullamelle ursprünglich separates Element sein.

Die Haltevorrichtung oder Haltevorrichtungen können zwei Teile aufweisen, wovon ein Teil integral mit der der Solarmodullamelle sein kann und der andere Teil ein ursprünglich separates Teil oder integral mit dem Grundelement sein kann.

Die Haltevorrichtung oder Haltevorrichtungen können zwei Teile aufweisen, wovon ein Teil integral mit dem Grundelement sein kann und der andere Teil ein ursprünglich separates Teil oder integral mit dem Solarmodullamelle sein kann.

Unabhängig davon, ob die Haltevorrichtung vom Grundelement und der Solarmodullamelle separat ist oder nicht, weist die Haltevorrichtung in einer Ausführungsform eine Halteöffnung auf, in die der Bereich der Querseite und/oder der unmittelbar an den Bereich der Querseite angrenzende Bereich der ersten und/oder zweiten Flachseite eingeführt ist.

Die Halteöffnung kann so eingerichtet sein, dass eine Klemmwirkung auf den eingeführten Bereich der Solarmodullamelle erzeugt wird.

In einer Ausführungsform befindet sich die Halteöffnung zumindest teilweise in einem Bereich der Haltevorrichtung, der aus der auf der Vorderseite angeordneten Oberfläche des Grundelements herausragt.

Alternativ oder ergänzend kann sich die Halteöffnung von der auf der Vorderseite angeordneten Oberfläche des Grundelements in Richtung der Rückseite erstrecken.

In einer Ausführungsform erstreckt sich die Halteöffnung durchgängig von der auf der Vorderseite angeordneten Oberfläche des Grundelements zur Rückseite des Grundelements hin.

In dieser Ausführungsform kann die Haltevorrichtung zumindest im für den Einsatz vorgesehenen Zustand neben der Halteöffnung ein Profil aufweisen, mit welchem die in die Halteöffnung eingeführte Solarmodullamelle am Grundelement fixiert ist.

Das Solarmodul ist zur Anbringung an einem Objekt (Träger), beispielsweise einem Balkongeländer, an einer Fassade oder an einem Dach, eingerichtet.

Das Solarmodul kann insbesondere dadurch zur Anbringung an einem der genannten Objekte eingerichtet sein, indem das Grundelement dafür geeignete Montagevorrichtungen aufweist und/oder indem das Solarmodul beispielsweise bezüglich Grösse, Gewicht, Stabilität und/oder optischen Eigenschaften für die Anbringung an einem der genannten Objekte ausgelegt ist.

Das Solarmodul kann derart eingerichtet sein, dass das Solarmodul frei hängend am Objekt anbringbar ist. Insbesondere kann das Solarmodul kein lasttragendes Element aufweisen, mit dem das Solarmodul direkt mit dem Boden oder mit einem Boden des Objekts verbunden ist.

Alternativ oder ergänzend kann das Solarmodul derart eingerichtet sein, dass die Solarmodullamelle (die Solarmodullamellen) nach Anbringung des Solarmoduls am Objekt nicht vertikal angeordnet ist (sind), sondern unter einem von Null verschiedenem Winkel zur Vertikalen verläuft (verlaufen). Der von Null verschiedene Winkel kann beispielsweise grösser als 20° sein.

In vielen Ausführungsformen weist das Solarmodul eine Mehrzahl, das heisst mindestens zwei, Solarmodullamellen in einer der zuvor beschriebenen Ausführungsformen und eine Mehrzahl von Haltevorrichtungen in einer der zuvor und nachfolgend beschriebenen Ausführungsformen auf.

Die Anzahl Haltevorrichtungen ist in der Regel auf die Anzahl Solarmodullamellen abgestimmt. Das heisst, die Anzahl Haltevorrichtungen kann der Anzahl Solarmodullamellen entsprechen oder ein ganzzahliges Vielfaches davon sein, falls mehrere Haltevorrichtungen zur Verbindung einer Solarmodullamelle mit dem Grundelement benötigt werden.

In der Ausführungsform mit einer Mehrzahl von Solarmodullamellen sind die Solarmodullamellen spätestens im für den Einsatz vorgesehenen Zustand des Solarmoduls in einer fixen relativen Position zueinander und zum Grundelement gehalten. Dies geschieht über die starre Verbindung zwischen Haltevorrichtung und Grundelement in einer der zuvor beschriebenen Ausführungsformen und über die starre Verbindung zwischen Solarmodullamelle und Haltevorrichtung in einer der zuvor beschriebenen Ausführungsformen.

Beispielsweise weist das Solarmodul mindestens eine weitere, das heisst zweite, Solarmodullamelle und mindestens eine weitere, das heisst zweite, Haltevorrichtung auf, wobei die weitere Haltevorrichtung die weitere Solarmodullamelle in einer fixen relativen Position zu einer ersten Solarmodullamelle und zum Grundelement hält.

Ein Solarmodul, das eine Mehrzahl an Solarmodullamellen aufweist, kann beispielsweise zwischen 2 und 15, insbesondere zwischen 3 und 10, beispielsweise 4, 5, 6, 7, 8 oder 9 Solarmodullamellen aufweisen.

Die Solarmodullamellen sind entlang einer Achse, die sich parallel zu den Normalen der Flachseiten der Solarmodullamellen erstreckt, versetzt angeordnet.

In einer bevorzugten Ausführungsform des Solarmoduls mit einer Mehrzahl von Solarmodullamellen ist das Grundelement im Wesentlichen luftdurchlässig. Dazu kann das Grundelement Gebiete aufweisen, die offen oder perforiert sind, so dass ein Fluid, insbesondere Luft, ohne (offen) oder mit stark reduziertem (perforiert) Widerstand von der Vorderseite des Grundelements auf dessen Rückseite und umgekehrt gelangen kann. Bei den Gebieten handelt es sich insbesondere um die Gebiete, die sich zwischen den Haltevorrichtungen befinden.

In einer Ausführungsform ist ein Gebiet, insbesondere alle Gebiete, des Grundelements, das zwischen den Haltevorrichtungen, angeordnet ist, luftdurchlässig, insbesondere offen.

Beispielsweise ist das Grundelement ein Grundelement mit profilartigen Elementen in irgendeiner der zuvor beschriebenen Ausführungsform.

Aufgrund der freistehenden Anordnung der Solarmodullamellen ist bei Ausführungsformen mit einem im Wesentlichen luftdurchlässigen Grundelement das Solarmodul selbst im Wesentlichen luftdurchlässig. Dies schliesst nicht aus, dass Luft entlang einer Komponente des Solarmoduls, insbesondere entlang einer Solarmodullamelle, strömt, wenn sie von der Vorderseite des Solarmoduls auf dessen Rückseite oder umgekehrt strömt.

Die offenen oder perforierten Gebiete können insbesondere grossräumig und ohne Hindernisse mit der Umgebung des Solarmoduls verbunden sein. In anderen Worten kann das Solarmodul offene oder perforierte Gebiete aufweisen, die sich zwischen den Haltevorrichtungen und zwischen den Solarmodullamellen erstrecken.

Das Solarmodul gemäss irgendeiner der offenbarten Ausführungsformen ist in der Regel derart, dass es transportierbar ist. Insbesondere ist es so transportierbar, wie das bei einzelnen, unverbauten Solarmodulen gemäss dem Stand der Technik, insbesondere Solarmodule mit flächigem, glattem Erscheinungsbild gemäss dem Stand der Technik, der Fall ist.

Neben dem Solarmodul betrifft die Erfindung ferner ein Verfahren zur Herstellung eines Solarmoduls, insbesondere des erfindungsgemässen Solarmoduls und der offenbarten Ausführungsformen.

Es versteht sich von selbst, dass das Verfahren Verfahrensschritte aufweisen kann, die Merkmalen des Solarmoduls entsprechen oder zu diesen Merkmalen führen. Ebenso kann das Solarmodul Merkmale aufweisen, die sich aus einem oder mehreren Verfahrensschritten ergeben.

Das Verfahren zur Herstellung eines Solarmoduls umfasst folgende Schritte:
- Bereitstellen einer Solarmodullamelle aufweisend eine erste Flachseite, eine zweite Flachseite und eine unter einem Winkel zur ersten und zweiten Flachseite verlaufende Querseite.

Bei der Solarmodullamelle handelt es sich insbesondere um eine Solarmodullamelle in einer der zuvor beschriebenen Ausführungsformen.
- Bereitstellen eines Grundelements und einer Haltevorrichtung, wobei das Grundelement eine Vorderseite und eine Rückseite aufweist und für die Haltevorrichtung beispielsweises zumindest eines des Nachfolgenden zutrifft:
   - die Haltevorrichtung ist ein starrer integraler Teil des Grundelements oder umfasst einen starren integralen Teil des Grundelements;
   - die Haltevorrichtung ist ein starrer integraler Teil der Solarmodullamelle oder umfasst einen starren integralen Teil der Solarmodullamelle;
   - die Haltevorrichtung oder ein Teil davon ist mit dem Grundelement starr verbunden oder wird mit diesem starr verbunden;
   - die Haltevorrichtung oder ein Teil davon ist mit der Solarmodullamelle starr verbunden oder wird mit dieser starr verbunden.

Beim Grundelement handelt es sich insbesondere um ein Grundelement in einer der zuvor beschriebenen Ausführungsformen.

Bei der Haltevorrichtung handelt es sich insbesondere um eine Haltevorrichtung in einer der zuvor beschriebenen Ausführungsformen.
- Positionieren der Solarmodullamelle relativ zum Grundelement.
- Fixieren der Solarmodullamelle relativ zum Grundelement unter Verwendung der Haltevorrichtung wobei die Solarmodullamelle freistehend zu einer auf der Vorderseite angeordneten Oberfläche des Grundelements fixiert wird.

Das Fixieren der Solarmodullamelle relativ zum Grundelement kann auf eine der zuvor beschriebenen Arten geschehen.

Insbesondere wird die Solarmodullamelle starr an der Haltevorrichtung oder einem Teil davon fixiert und/oder die Haltevorrichtung oder ein Teil davon wird starr am Grundelement fixiert und/oder Teile der Haltevorrichtung werden starr aneinander fixiert.

Unabhängig davon, wie genau bewerkstelligt wird, dass die Solarmodullamelle relativ zum Grundelement unter Verwendung der Haltevorrichtung fixiert wird, ist oder wird die Solarmodullamelle (i) nur in einem Bereich der Querseite oder (ii) nur in einem Bereich der Querseite und in einem an den Bereich der Querseite unmittelbar angrenzenden Bereich der ersten und/oder zweiten Flachseite oder (iii) nur in einem an den Bereich der Querseite unmittelbar angrenzenden Bereich der ersten und/oder zweiten Flachseite an der Haltevorrichtung fixiert.

In einer Ausführungsform eine Linienlagerung zwischen der Solarmodullamelle und der Haltevorrichtung erzeugt.

Die im Verfahren verwendeten Begriffe wie beispielsweise "Querseite", "starr", "freistehend" oder "unmittelbar angrenzend" haben dieselbe Bedeutung wie in Zusammenhang mit dem Solarmodul angegeben.

Die Fixierung der Solarmodullamelle an oder in der Haltevorrichtung kann über eine Linien-, Punkt- oder Flächenverbindung, beziehungsweise Verbindungen, wie in Zusammenhang mit dem Solarmodul offenbart, erfolgen oder erfolgt sein.

In einer Ausführungsform des Verfahrens werden mindestens eine weitere Solarmodullamelle und mindestens eine weitere Haltevorrichtung bereitgestellt.

Die Anzahl an insgesamt zur Verfügung gestellten Solarmodullamellen und Haltevorrichtung kann wie in Verbindung mit dem Solarmodul offenbart sein.

Bei dieser Ausführungsform sind die Haltevorrichtungen, auch falls sie aus mehreren Teilen bestehen, die während des Verfahrens aneinander fixiert werden, und die Verbindungen, die zwischen den Haltevorrichtungen und den Solarmodullamellen bestehen oder während des Verfahrens hergestellt werden, und die Verbindungen, die zwischen den Haltevorrichtungen und der Grundelement bestehen oder während des Verfahrens hergestellt werden, derart, dass die Solarmodullamellen relativ zueinander und relativ zum Grundelement unbeweglich gehalten werden.

In einer Ausführungsform weist die Haltevorrichtung (oder die Haltevorrichtungen) eine Halteöffnung auf.

Die Halteöffnung kann auf eine der Arten realisiert sein, wie sie in Verbindung mit dem Solarmodul offenbart wurde.

Bei dieser Ausführungsform weist das Verfahren einen Schritt auf, in welchem der Bereich der Querseite in die Halteöffnung eingeführt wird.

In der Regel wird neben besagtem Bereich der Querseite auch der unmittelbar an den Bereich der Querseite angrenzende Bereich der ersten und/oder zweiten Flachseite in die Halteöffnung eingeführt.

Das Einführen des Bereichs der Querseite und optional eines angrenzenden Bereichs der ersten und/oder zweiten Flachseite in eine Halteöffnung kann ein erster Schritt zur Fixierung der Solarmodullamelle in der Haltevorrichtung und damit am Grundelement sein. Die Fixierung kann auf eine der Arten erfolgen, wie sie in Zusammenhang mit dem Solarmodul offenbart wurden.

Nachfolgend werden Ausführungsbeispiele der Erfindung anhand von Figuren beschrieben. Es zeigen:
- **Figur 1**: 3D-Ansicht eines beispielhaften Solarmoduls;
- **Figur 2**: Grundriss des beispielhaften Solarmoduls gemäss Figur 1;
- **Figur 3**: Seitenansicht des beispielhaften Solarmoduls gemäss Figur 1;
- **Figur 4**: 3D-Ansicht eines weiteren beispielhaften Solarmoduls mit offenem Grundelement;
- **Figur 5**: Schematische Darstellung einer beispielhaften Haltevorrichtung;
- **Figur 6**: Schematische Darstellung einer weiteren beispielhaften Haltevorrichtung; und
- **Figur 7**: Seitenansicht eines beispielhaften Solarmoduls, bei welchem eine Solarmodullamelle unter Verwendung der Haltevorrichtung gemäss Figur 5 relativ zum Grundelement fixiert ist.

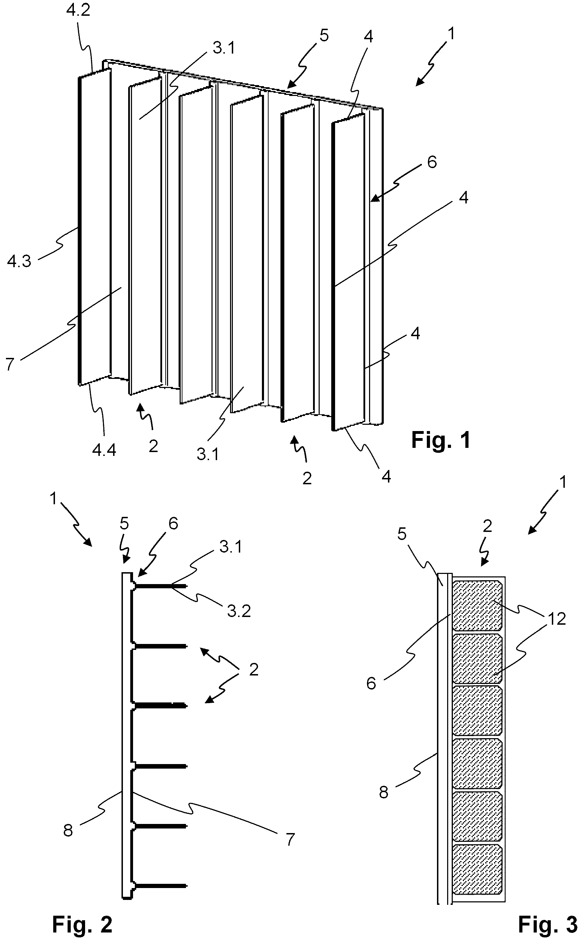

**Figur 1** zeigt eine 3D-Ansicht einer beispielhaften Ausführungsform eines Solarmoduls 1.

Das Solarmodul 1 weist eine Mehrzahl von Solarmodullamellen 2 (beispielhaft gezeigt sind sechs Solarmodullamellen 2), ein Grundelement 5 und eine Haltevorrichtung 6 auf.

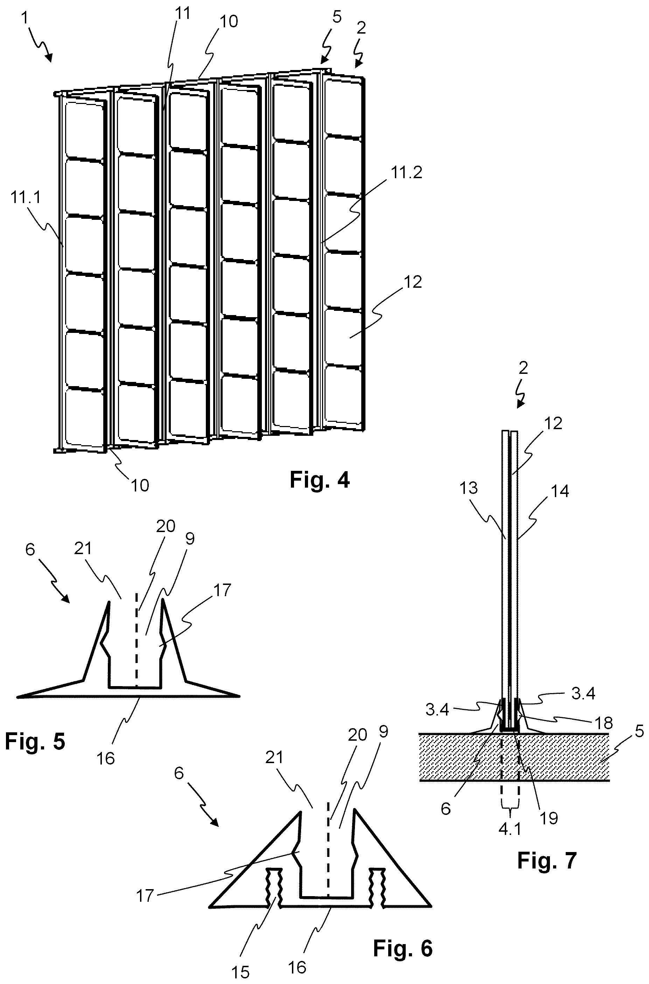

Jede Solarmodullamelle 2 weist eine erste Flachseite 3.1 und eine zweite Flachseite 3.2 auf. Eine der beiden Flachseiten wird durch ein Deckelement 13 und die andere der beiden Flachseiten durch ein Rückelement 14 gebildet, wie beispielsweise in Figur 7 gezeigt. Ferner weist jede Solarmodullamelle 2 eine Querseite 4 auf.

In der gezeigten Ausführungsform hat die Solarmodullamelle 2 eine rechteckige Grundform, weshalb die Querseite 4 durch vier Teilbereiche 4.1-4.4 gebildet wird, wobei nur drei Teilbereiche 4.2-4.4 in Figur 1 sichtbar sind und ein Teilbereich 4.1 in der Haltevorrichtung 6 angeordnet ist, beispielsweise wie in Figur 7 gezeigt.

In der gezeigten Ausführungsform wird das Grundelement 5 durch eine durchgehende Platte gebildet, in die die Haltevorrichtungen 6 für die Solarmodullamellen 2 eingebracht sind oder an die die Haltevorrichtungen 6 für die Solarmodullamellen 2 angebracht sind.

Das Grundelement 5 weist eine Vorderseite 7 und eine Rückseite 8 auf, wie beispielsweise in Figur 2 gezeigt.

Die Solarmodullamellen 2 sind auf der Vorderseite 7 angeordnet sind, sobald sie am Grundelement 5 montiert sind. Die Rückseite ist diejenige Seite des Grundelements 5, die bei zweckmässiger Montage des Solarmoduls an einem Objekt dem Objekt zugewandt ist.

In der Ausführungsform gemäss Figur 1 sind die Haltevorrichtungen 6 derart eingerichtet, dass die Solarmodullamellen 2 senkrecht zur Ebene stehen, die durch die Vorderseite 7 definiert wird. Das heisst, dass die erste und zweite Flachseite der Solarmodullamellen 2 unter einem Winkel von 90° zu dieser Ebene verlaufen. In vielen Ausführungsformen verlaufen die Solarmodullamellen 2 unter einem anderen Winkel als 90°. In der Regel ist der Winkel vom Einsatzgebiet, insbesondere dem Montageort, des Solarmoduls 1 abhängig und auf eine optimale Ausrichtung zur Sonne hin ausgelegt.

Jede Haltevorrichtung 6 ist ferner derart eingerichtet, dass sie spätestens im Zustand, in dem das Solarmodul eingesetzt wird, starr mit dem Grundelement 5 und starr mit der Solarmodullamelle 2, die sie am Grundelement 5 fixiert, verbunden ist.

Ferner ist jede Haltevorrichtung 6 derart eingerichtet, dass die Solarmodullamelle 2, die sie am Grundelement 5 fixiert, freistehend unter einem Winkel zum Grundelement 5, beispielsweise den in Figur 1 gezeigten 90°, verläuft.

In den Figuren 5-7 sind beispielhafte Ausführungsformen der Haltevorrichtung 6 gezeigt, die sowohl für eine starre Verbindung zum Grundelement 5 und zur Solarmodullamelle 6 als auch für eine unter einem Winkel zum Grundelement 5 verlaufende, freistehende Anordnung der Solarmodullamelle 2 eingerichtet sind.

**Figur 2** zeigt den Grundriss der in Figur 1 gezeigten beispielhaften Ausführungsform des Solarmoduls 1.

Im Grundriss ist neben der bereits in Figur 1 ersichtlichen ersten Flachseite 3.1 der Solarmodullamelle 2 auch die der ersten Flachseite 3.1 gegenüberliegende zweite Flachseite 3.2 ersichtlich. Ferner ist die der Vorderseite 7 des Grundelements 5 gegenüberliegende Rückseite 8 zu erkennen.

**Figur 3** zeigt eine Seitenansicht der in den Figuren 1 und 2 gezeigten beispielhaften Ausführungsform des Solarmoduls 1.

In dieser Ansicht sind die Solarzellen 12 einer Solarmodullamelle 2 sichtbar.

In der gezeigten Ausführungsform weist jede Solarmodullamelle 2 eine Mehrzahl von bificalen Solarzellen 12 auf. In Figur 3 sind beispielhaft sechs bificale Solarzellen 12 gezeigt. Diese sind zwischen dem Deckelement 13 und dem Rückelement 14 einlaminiert, wie in Figur 7 gezeigt.

**Figur 4** zeigt eine 3D-Ansicht einer weiteren beispielhaften Ausführungsform eines Solarmoduls 1. Bei der in Figur 4 gezeigten Ausführungsform handelt es sich um ein Beispiel einer bevorzugten Ausführungsform des Solarmoduls, bei welchem weite Teile des Grundelements 5 luftdurchlässig sind. In der in Figur 4 gezeigten Ausführungsform ist die Luftdurchlässigkeit dadurch gegeben, dass die Grundform rahmenartig ist und das Gebiet zwischen den Solarmodullamellen, insbesondere zwischen deren Haltevorrichtung, offen (leer) ist.

Im Vergleich zur Ausführungsform gemäss den Figuren 1-3 weist die in Figur 4 gezeigte Ausführungsform ein Grundelement 5 auf, das aus zwei Verbindungsträgern 10 und aus Tragprofilen 11 in der Anzahl der Solarmodullamellen 2 besteht.

Die Tragprofile 11 bilden die Haltevorrichtungen 6 oder tragen die Haltevorrichtungen 6.

In der gezeigten Ausführungsform ist das Grundelement 5 in Form eines Rahmens realisiert ist. Der Rahmen ist in der gezeigten Ausführungsform durch die zwei Verbindungsträger 10 und die zwei aussenliegenden Tragprofile 11.1, 11.2 gegeben.

Der Rahmen definiert einen Innenraum, der durch den Rahmen gegen aussen hin abgeschlossen wird.

Der Innenraum weist weitere Tragprofile 11 auf.

Abgesehen von den weiteren Tragprofilen 11 ist der Innenraum leer, das heisst, nicht durch ein zum Solarmodul 1 gehörendes Element ausgefüllt oder teilweise ausgefüllt.

Abgesehen von der Ausgestaltung des Grundelements 5 und der Befestigung der Haltevorrichtungen 6 am Grundelement 5 weist die Ausführungsform gemäss Figur 4 dieselben Elemente auf, wie in Verbindung mit der Ausführungsform gemäss den Figuren 1-3 offenbart.

Die **Figuren 5 und 6** zeigen beispielhafte Haltevorrichtung 6, die sowohl für eine starre Verbindung zum Grundelement 5 und zur Solarmodullamelle 2 als auch für eine unter einem Winkel zum Grundelement 5 verlaufende, freistehende Anordnung der Solarmodullamelle 2 eingerichtet sind.

Die in den Figuren 5 und 6 gezeigten Haltevorrichtungen 6 sind auf eine Verbindung zwischen Solarmodullamelle 2 und Haltevorrichtung 6 ausgelegt, bei der es von Vorteil ist, wenn nicht nur ein Teilbereich 4.1 der Querseite 4 der Solarmodullamelle 2 an der Verbindung beteiligt ist, sondern auch ein Bereich 3.4 der ersten und zweiten Flachseiten, der unmittelbar an den Teilbereich 4.1 der Querseite 4 angrenzt. Deshalb weisen die Haltevorrichtungen 6 gemäss den Figuren 5 und 6 eine Halteöffnung 9 auf.

Die Halteöffnung 9 ist derart dimensioniert, dass die an der Verbindung zwischen Solarmodullamelle 2 und Haltevorrichtung 6 beteiligten Bereiche, das heisst der Teilbereich 4.1 der Querseite 4 und die unmittelbar angrenzenden Bereiche 3.4 der Flachseiten, in die Halteöffnung 9 eingeführt werden kann.

Die Halteöffnung 9 ist ferner dazu eingerichtet, dass die in die Halteöffnung 9 eingeführten Bereiche starr mit der Haltevorrichtung 6 verbunden werden können.

In den in den Figuren 5 und 6 gezeigten Ausführungsformen weist die Halteöffnung 9 deshalb eine Fixieröffnung 17 in Form eines Hinterschnitts auf. Alternativ oder ergänzend können die Haltevorrichtungen 9 oder deren Halteöffnungen 9 ein Element anderer Einrastvorrichtungen aufweisen und/oder eingerichtet sein, beispielsweise eine Verschraubung, Verklemmung oder Verklebung zwischen der Haltevorrichtung 9 und der Solarmodullamelle 2 herzustellen.

Die gezeigten Haltevorrichtungen 6 weisen ferner eine Kontaktfläche 16 auf.

Die Kontaktfläche 16 ist auf eine Fläche des Grundelements 5 abgestimmt, an der die Haltevorrichtung 6 befestigt ist oder befestigt werden soll. In den gezeigten Ausführungsformen erstreckt sich die Kontaktfläche 16 entlang einer nicht gebogenen Ebene. Das heisst, die Kontaktflächen 16 sind auf eine Montage an plattenartigen Grundelementen 5, wie beispielsweise in Figur 1 gezeigt, ausgelegt.

Die Kontaktfläche 16 kann aber auch gebogen und/oder abgewinkelt sein. Beispielsweise kann eine auf eine Montage an einem Querträger 11 ausgelegte Kontaktfläche 16 eine Form aufweisen, die auf das Profil des Querträgers 11, das heisst auf die Form des Querträgers 11 in einem Schritt senkrecht zu seiner Längsachse, abgestimmt ist.

Die Haltevorrichtungen 6 können Mittel umfassen, die eine Befestigung der Haltevorrichtungen 6 am Grundelement 5 ermöglichen oder begünstigen.

Die Ausführungsform gemäss Figur 5 ist eingerichtet, über einen Klebstoff am Grundelement 5 befestigt zu werden. Entsprechend kann die Kontaktfläche 16 eingerichtet sein, die Festigkeit einer Verbindung zwischen Klebstoff und Kontaktfläche zu erhöhen, beispielsweise indem die Kontaktfläche 16 aufgeraut ist.

Die Ausführungsform gemäss Figur 6 ist eingerichtet, über ein Befestigungselement, beispielsweise eine Schraube, am Grundelement 5 befestigt zu werden. Die Haltevorrichtung 6 weist deshalb Bohrungen 15 auf, die in der Kontaktfläche 16 münden.

Andere Mittel zur Befestigung der Haltevorrichtungen 6 am Grundelement 5 sind denkbar, beispielsweise Einrast- und/oder Klemmvorrichtungen, wobei mindestens ein Element einer solchen Vorrichtung an der Haltevorrichtung 6 und ein Element am Grundelement 5 angeordnet ist.

Alternativ zu einer Verklebung, Verschraubung, Verklemmung, Einrastung etc. kann eine Haltevorrichtung 6 wie in den Figuren 5 und 6 gezeigt auch ein integraler Bestandteil des Grundelements 5 sein.

Beispielsweise können die in Figur 4 gezeigten Querträger 11 ein Profil aufweisen, das die in den Figuren 5 und 6 gezeigten Halteöffnungen 9 umfasst.

Beispielsweise können Halteöffnungen 9 wie in den Figuren 5 und 6 gezeigt in das plattenartige Grundelement 5 gemäss den Figuren 1-3 eingearbeitet sein, beispielsweise in Form von Öffnungen, die sich von der Vorderseite 7 in Richtung der Rückseite 8 erstrecken, und/oder ausgeformt sein, beispielsweise in Fortsätzen, die aus der Vorderseite 7 herausragen. Letzteres ist in Figur 2 schematisch dargestellt.

In den in den Figuren 5-7 gezeigten Ausführungsformen ist der Winkel, unter welchem die Solarmodullamelle 2 zum Grundelement 5 in montiertem Zustand verläuft, durch den Winkel, unter welchem die Haltevorrichtung 6 zum Grundelement 5 montiert wird, gegeben. Alternativ oder ergänzend kann der Winkel, unter welchem die Solarmodullamelle 2 zum Grundelement 5 in montiertem Zustand verläuft, auch durch die Achse 20, entlang welcher sich die Halteöffnung 9 von einer Einführöffnung 21 zum Grundelement 5 hin erstreckt, gegeben sein.

**Figur 7** zeigt eine Seitenansicht eines beispielhaften Solarmoduls 1, bei welchem eine Solarmodullamelle 2 unter Verwendung der Haltevorrichtung 6 gemäss Figur 5 relativ zum Grundelement 5 fixiert ist.

In der gezeigten Ausführungsform weist die Solarmodullamelle 2 zumindest im Bereich, der in die Halteöffnung 9 eingeführt ist, ein Verstärkungselement in Form eines Rahmens 19 auf.

In der gezeigten Ausführungsform ist auf dem Rahmen 19 ein Fortsatz 18 derart angeordnet, dass er in einer Sollposition der Solarmodullamelle 2 relativ zur Haltevorrichtung 6 in die Fixieröffnung 17 eingreift. Das heisst, die Solarmodullamelle 2 wird starr mit der Haltevorrichtung 6 verbunden, indem der auf der Solarmodullamelle 2 angeordnete Fortsatz 18 in die Fixieröffnung 17 der Haltevorrichtung 6 einrastet.

Ein Verschieben der Solarmodullamelle 2 entlang einer Richtung, die senkrecht zur Achse 20 der Halteöffnung 9 verläuft, kann durch eine entsprechende Begrenzung der Halteöffnung 9 und/oder durch eine entsprechende Ausgestaltung von Fixieröffnung 17 und Fortsatz 18 verhindert werden.

Wie erwähnt kann die starre Verbindung zwischen Solarmodullamelle 2 und Haltevorrichtung 6 ergänzend oder alternativ zur gezeigten Einrastvorrichtung auf eine andere Art und Weise realisiert sein, beispielsweise durch eine andere Einrastvorrichtung, durch Verschraubung, Verklemmung oder Verklebung. In diesem Fall kann die Solarmodullamelle, insbesondere der in die Halteöffnung 9 eingeführte Bereich, beispielsweise das Verstärkungs- beziehungsweise Rahmenelement 19, ein Element der anderen Einrastvorrichtung aufweisen und/oder eingerichtet sein, die Verschraubung, Verklemmung oder Verklebung zwischen der Haltevorrichtung 9 und der Solarmodullamelle 2 herzustellen.

## Patentansprüche

1. Solarmodul (1) zur Anbringung an einem Objekt, aufweisend ein Grundelement (5), mindestens zwei Haltevorrichtungen (6) und mindestens zwei Solarmodullamellen (2), wobei die mindestens zwei Solarmodullamellen (2) jeweils eine erste Flachseite (3.1), eine zweite Flachseite (3.2) und eine unter einem Winkel zur ersten und zweiten Flachseite verlaufende Querseite (4) aufweist, wobei die mindestens zwei Solarmodullamellen (2) entlang einer Achse, die sich parallel zu den Normalen der Flachseiten der Solarmodullamellen erstreckt, versetzt angeordnet sind, und das Grundelement (5) eine Vorderseite (7) und eine Rückseite (8) aufweist, wobei die Haltevorrichtungen (6) jeweils starr mit dem Grundelement (5) und die mindestens zwei Solarmodullamellen (2) starr mit jeweils einer Haltevorrichtung (6) verbunden sind, wobei die mindestens zwei Solarmodullamellen (2) jeweils nur in einem Bereich (4.1) der Querseite (4) oder nur in einem Bereich (4.1) der Querseite (4) und in einem an den Bereich (4.1) der Querseite (4) unmittelbar angrenzenden Bereich (3.4) der ersten und/oder zweiten Flachseite oder nur in einem an den Bereich (4.1) der Querseite (4) unmittelbar angrenzenden Bereich (3.4) der ersten und/oder zweiten Flachseite mit der Haltevorrichtung (6) verbunden sind, und wobei die mindestens zwei Solarmodullamellen (2) jeweils freistehend zu einer auf der Vorderseite (7) angeordneten Oberfläche des Grundelements (5) angeordnet sind.

2. Solarmodul (1) nach Anspruch 1, wobei die Haltevorrichtung (6) die Solarmodullamelle (2) in einer fixen relativen Position zum Grundelement (5) hält.

3. Solarmodul (1) nach einem der Ansprüche 1 bis 2, wobei ein Gebiet des Grundelements (5), das zwischen der Haltevorrichtung (5) und der weiteren Haltevorrichtung (6) angeordnet ist, luftdurchlässig ist.

4. Solarmodul (1) nach Anspruch 2 oder 3, wobei das Grundelement (5) einen Verbindungsträger (10) umfasst und das Solarmodul (1) ein Tragprofil (11) und ein weiteres Tragprofil (11) umfasst, wobei die Haltevorrichtung (6) am Tragprofil (11) und die weitere Haltevorrichtung (6) am weiteren Tragprofil (11) angeordnet ist und wobei der Verbindungsträger (10) das Tragprofil (11) und das weitere Tragprofile (11) starr miteinander verbindet.

5. Solarmodul (1) nach Anspruch 4, wobei das Grundelement (5) die Tragprofile (11) umfasst und abgesehen vom Verbindungsträger (10) und den Trageprofilen (11) offen und/oder für elektromagnetische Strahlung im sichtbaren Bereich transparent ist.

6. Solarmodul (1) nach einem der Ansprüche 1 bis 5, wobei die Haltevorrichtung (6) eine Halteöffnung (9) aufweist, in die der Bereich (4.1) der Querseite (4) und/oder der unmittelbar an den Bereich (4.1) der Querseite (4) angrenzende Bereich (3.4) der ersten und/oder zweiten Flachseite der Solarmodullamelle (2) eingeführt ist.

7. Solarmodul (1) nach Anspruch 6, wobei für die Halteöffnung (9) zumindest eines des Nachfolgenden gilt:
• Die Halteöffnung (9) befindet sich zumindest teilweise in einem Bereich der Haltevorrichtung (6), der aus der auf der Vorderseite (7) angeordneten Oberfläche des Grundelements (5) herausragt;
• Die Halteöffnung (9) erstreckt sich von der auf der Vorderseite (7) angeordneten Oberfläche des Grundelements (5) in Richtung der Rückseite (8).

8. Solarmodul (1) nach einem der Ansprüche 1-7, wobei das Solarmodul zur Anbringung an einem Balkongeländer, an einer Fassade oder an einem Dach eingerichtet ist.

9. Solarmodul (1) nach einem der Ansprüche 1 bis 9, wobei eine elektrische Verbindung der Solarmodullamelle (2) einen Leiter aufweist, welcher an einer Stelle der Solarmodullamelle (2) über den Rand der Solarmodullamelle (2) hinausragt, wobei diese Stelle auf die Anordnung eines entsprechenden Leiters an der Haltevorrichtung (6) oder am Grundelement (5) abgestimmt ist, so dass bei korrekter Positionierung der Solarmodullamelle (2) in der Haltevorrichtung (6), beziehungsweise im Grundelement (5), eine leitende Verbindung zwischen dem Solarmodullamelle-seitigen Leiter und dem Haltevorrichtung-seitigen Leiter, beziehungsweise dem Grundelement-seitigen Leiter, vorliegt.

10. Verfahren zur Herstellung eines Solarmoduls (1) nach einem der Ansprüche 1 bis 9, umfassend die Schritte:
• Bereitstellen von mindestens zwei Solarmodullamellen (2) jeweils aufweisend eine erste Flachseite (3.1), eine zweite Flachseite (3.2) und eine unter einem Winkel zur ersten und zweiten Flachseite verlaufende Querseite (4);
• Bereitstellen eines Grundelements (5) und von mindestens zwei Haltevorrichtungen (6), wobei das Grundelement (5) eine Vorderseite (7) und eine Rückseite (8) aufweist und wobei die Haltevorrichtungen (6) ein starrer integraler Teil des Grundelements (5) sind oder umfassen oder wobei die Haltevorrichtungen (6) ein starrer integraler Teil der Solarmodullamellen (2) sind oder umfassen oder wobei die Haltevorrichtungen (6) oder ein Teil davon mit dem Grundelement (5) und/oder den Solarmodullamellen (2) starr verbunden sind oder starr verbunden werden;
• Positionieren der Solarmodullamellen (2) relativ zum Grundelement (5);
• Fixieren der Solarmodullamellen (2) relativ zum Grundelement unter Verwendung der Haltevorrichtungen (6), wobei die Solarmodullamellen (2) freistehend zu einer auf der Vorderseite (7) angeordneten Oberfläche des Grundelements (5) fixiert werden;
wobei die Solarmodullamellen (2) starr an den Haltevorrichtungen (6) fixiert werden oder fixiert sind, wobei die Solarmodullamellen (2) nur in einem Bereich (4.1) der Querseite (4) oder nur in einem Bereich (4.1) der Querseite (4) und in einem an den Bereich (4.1) der Querseite (4) unmittelbar angrenzenden Bereich (3.4) der ersten und/oder zweiten Flachseite oder nur in einem an den Bereich (4.1) der Querseite (4) unmittelbar angrenzenden Bereich (3.4) der ersten und/oder zweiten Flachseite an den Haltevorrichtungen (6) fixiert werden oder fixiert sind.

11. Verfahren nach Anspruch 10, wobei eine Linienlagerung zwischen den Solarmodullamellen (2) und den Haltevorrichtungen (6) erzeugt wird.

12. Verfahren nach Anspruch 10 oder 11, wobei die Haltevorrichtungen (6) und die Verbindungen zwischen Haltevorrichtungen (6) und Solarmodullamellen (2) und die Verbindungen zwischen Haltevorrichtungen (6) und Grundelement (5) derart sind oder realisiert werden, dass die Solarmodullamellen (2) relativ zueinander und relativ zum Grundelement (5) unbeweglich gehalten werden.

13. Verfahren nach einem der Ansprüche 10-12, wobei die Haltevorrichtungen (6) eine Halteöffnung (9) aufweisen, und wobei der Bereich (4.1) der Querseite (4) der Solarmodullamellen (2) in die Halteöffnungen (9) eingeführt werden.

14. Verfahren nach einem der Ansprüche 10 bis 13, wobei bei korrekter Positionierung der Solarmodullamelle (2) in der Haltevorrichtung (6), beziehungsweise im Grundelement (5), eine leitende Verbindung zwischen dem Solarmodullamelle-seitigen Leiter und dem Haltevorrichtung-seitigen Leiter, beziehungsweise dem Grundelement-seitigen Leiter, entsteht.

## Claims

1. Solar module (1) for mounting to an object, comprising a base element (5), at least two retaining devices (6) and at least two solar module slats (2), wherein the at least two solar module slats (2) each comprise a first flat side (3.1), a second flat side (3.2) and a transverse side (4) extending at an angle to the first and second flat sides, wherein the at least two solar module slats (2) are arranged in a staggered manner along an axis extending parallel to the normals of the flat sides of the solar module slats, and the base element (5) has a front side (7) and a rear side (8), wherein the retaining devices (6) are each rigidly connected to the base element (5) and the at least two solar module slats (2) are each rigidly connected to a respective retaining device (6), wherein the at least two solar module slats (2) are each connected only in a region (4.1) of the transverse side (4) or only in a region (4.1) of the transverse side (4) and in a region (3.4) of the first and/or second flat side immediately adjacent to the region (4.1) of the transverse side (4), or only in a region (3.4) of the first and/or second flat side immediately adjacent to the region (4.1) of the transverse side (4) with the retaining device (6), and wherein the at least two solar module slats (2) are each arranged free-standing relative to a surface of the base element (5) arranged on the front side (7).

2. Solar module (1) according to claim 1, wherein the retaining device (6) holds the solar module slat (2) in a fixed relative position to the base element (5).

3. A solar module (1) according to any one of claims 1 to 2, wherein a region of the base element (5) situated between the retaining device (6) and the further retaining device (6) is air-permeable.

4. Solar module (1) according to claim 2 or 3, wherein the base element (5) comprises a connecting beam (10) and the solar module (1) comprises a support profile (11) and a further support profile (11), wherein the retaining device (6) is arranged on the support profile (11) and the further retaining device (6) is arranged on the further support profile (11), and wherein the connecting beam (10) rigidly connects the support profile (11) and the further support profile (11) to one another.

5. Solar module (1) according to claim 4, wherein the base element (5) comprises the support profiles (11) and, apart from the connecting beam (10) and the support profiles (11), is open and/or transparent to electromagnetic radiation in the visible spectrum.

6. Solar module (1) according to any one of claims 1 to 5, wherein the retaining device (6) has a retaining opening (9) into which the region (4.1) of the transverse side (4) and/or the region (3.4) of the first and/or second flat side of the solar module slat (2) immediately adjacent to the region (4.1) of the transverse side (4) is inserted.

7. Solar module (1) according to claim 6, wherein at least one of the following applies to the retaining opening (9):
• The retaining opening (9) is located at least partially in a region of the retaining device (6) which protrudes from the surface of the base element (5) arranged on the front side (7);
• The retaining opening (9) extends from the surface of the base element (5) arranged on the front side (7) towards the rear side (8).

8. A solar module (1) according to any one of claims 1 to 7, wherein the solar module is adapted for mounting on a balcony railing, a façade or a roof.

9. A solar module (1) according to any one of claims 1 to 9, wherein an electrical connection of the solar module slat (2) comprises a conductor which protrudes beyond the edge of the solar module slat (2) at a point on the solar module slat (2), wherein this point is matched to the arrangement of a corresponding conductor on the retaining device (6) or on the base element (5), such that, when the solar module slat (2) is correctly positioned in the retaining device (6) or in the base element (5), a conductive connection exists between the conductor on the solar module slat side and the conductor on the retaining device side or the conductor on the base element side.

10. A method for manufacturing a solar module (1) according to any one of claims 1 to 9, comprising the steps of:
• providing at least two solar module slats (2), each having a first flat side (3.1), a second flat side (3.2) and a transverse side (4) extending at an angle to the first and second flat sides;
• Providing a base element (5) and at least two retaining devices (6), wherein the base element (5) has a front side (7) and a rear side (8), and wherein the retaining devices (6) are or comprise a rigid integral part of the base element (5), or wherein the retaining devices (6) are or comprise a rigid integral part of the solar module slats (2), or wherein the retaining devices (6) or a part thereof are rigidly connected to the base element (5) and/or the solar module slats (2) or are to be rigidly connected;
• positioning the solar module slats (2) relative to the base element (5);
• fixing the solar module slats (2) relative to the base element using the retaining devices (6), wherein the solar module slats (2) are fixed in a cantilevered manner to a surface of the base element (5) arranged on the front side (7);
wherein the solar module slats (2) are rigidly fixed to the retaining devices (6), wherein the solar module slats (2) are fixed only in a region (4.1) of the transverse side (4) or only in a region (4.1) of the transverse side (4) and in a region (3.4) of the first and/or second flat side immediately adjacent to the region (4.1) of the transverse side (4), or only in a region (3.4) of the first and/or second flat side immediately adjacent to the region (4.1) of the transverse side (4), to the retaining devices (6).

11. A method according to claim 10, wherein a linear bearing is created between the solar module slats (2) and the retaining devices (6).

12. A method according to claim 10 or 11, wherein the retaining devices (6) and the connections between retaining devices (6) and solar module slats (2) and the connections between retaining devices (6) and base element (5) are such or are realised in such a way that the solar module slats (2) are held immovably relative to one another and relative to the base element (5).

13. A method according to any one of claims 10 to 12, wherein the retaining devices (6) comprise a retaining opening (9), and wherein the region (4.1) of the transverse side (4) of the solar module slats (2) is inserted into the retaining openings (9).

14. A method according to any one of claims 10 to 13, wherein, when the solar module slat (2) is correctly positioned in the retaining device (6) or in the base element (5), a conductive connection is established between the conductor on the solar module slat side and the conductor on the retaining device side or the conductor on the base element side.

## Revendications

1. Module solaire (1) destiné à être fixé sur un objet, comprenant un élément de base (5), au moins deux dispositifs de fixation (6) et au moins deux lamelles de module solaire (2), lesdites au moins deux lamelles de module solaire (2) présentant chacune une première face plane (3.1), une deuxième face plane (3.2) et une face transversale (4) s'étendant sous un angle par rapport aux première et deuxième faces planes, les au moins deux lamelles de module solaire (2) étant disposées en quinconce le long d'un axe s'étendant parallèlement aux normales des faces planes des lamelles de module solaire, et l'élément de base (5) présentant une face avant (7) et une face arrière (8), les dispositifs de fixation (6) étant chacun reliés de manière rigide à l'élément de base (5) et les au moins deux lamelles de module solaire (2) étant chacune reliées de manière rigide à un dispositif de fixation (6), les au moins deux lamelles de module solaire (2) n'étant chacune reliées que dans une zone (4.1) de la face transversale (4) ou uniquement dans une zone (4.1) de la face transversale (4) et dans une zone (3.4) de la première et/ou de la deuxième face plane immédiatement adjacente à la zone (4.1) de la face transversale (4), ou uniquement dans une zone (3.4) de la première et/ou de la deuxième face plane immédiatement adjacente à la zone (4.1) de la face transversale (4), et dans lequel les au moins deux lamelles de module solaire (2) sont chacune disposées de manière en porte-à-faux par rapport à une surface de l'élément de base (5) située sur la face avant (7).

2. Module solaire (1) selon la revendication 1, dans lequel le dispositif de fixation (6) maintient la lamelle de module solaire (2) dans une position relative fixe par rapport à l'élément de base (5).

3. Module solaire (1) selon l'une des revendications 1 à 2, dans lequel une zone de l'élément de base (5) située entre le dispositif de fixation (6) et l'autre dispositif de fixation (6) est perméable à l'air.

4. Module solaire (1) selon la revendication 2 ou 3, dans lequel l'élément de base (5) comprend un support de liaison (10) et le module solaire (1) comprend un profilé porteur (11) et un autre profilé porteur (11), le dispositif de fixation (6) étant disposé sur le profilé porteur (11) et l'autre dispositif de fixation (6) étant disposé sur l'autre profilé porteur (11), et le support de liaison (10) reliant rigidement entre eux le profilé porteur (11) et l'autre profilé porteur (11).

5. Module solaire (1) selon la revendication 4, dans lequel l'élément de base (5) comprend les profilés de support (11) et, à l'exception du support de liaison (10) et des profilés de support (11), est ouvert et/ou transparent au rayonnement électromagnétique dans le domaine visible.

6. Module solaire (1) selon l'une des revendications 1 à 5, dans lequel le dispositif de fixation (6) présente une ouverture de retenue (9) dans laquelle s'engage la zone (4.1) de la face transversale (4) et/ou la zone (3.4) de la première et/ou de la deuxième face plate de la lamelle de module solaire (2), qui est immédiatement adjacente à la zone (4.1) de la face transversale (4), est insérée.

7. Module solaire (1) selon la revendication 6, dans lequel au moins l'une des caractéristiques suivantes s'applique à l'ouverture de retenue (9):
• L'ouverture de retenue (9) se trouve au moins partiellement dans une zone du dispositif de fixation (6) qui fait saillie à partir de la surface de l'élément de base (5) disposée sur la face avant (7);
• L'ouverture de retenue (9) s'étend depuis la surface de l'élément de base (5) disposée sur la face avant (7) en direction de la face arrière (8).

8. Module solaire (1) selon l'une des revendications 1 à 7, le module solaire étant conçu pour être fixé à une balustrade de balcon, à une façade ou à un toit.

9. Module solaire (1) selon l'une des revendications 1 à 9, dans lequel, une connexion électrique de la lamelle de module solaire (2) comporte un conducteur qui dépasse du bord de la lamelle de module solaire (2) en un point de celle-ci, ce point étant adapté à la disposition d'un conducteur correspondant sur le dispositif de fixation (6) ou sur l'élément de base (5), de sorte que, lorsque la lamelle de module solaire (2) est correctement positionnée dans le dispositif de fixation (6) ou dans l'élément de base (5), il existe une connexion conductrice entre le conducteur côté lamelle de module solaire et le conducteur côté dispositif de fixation ou le conducteur côté élément de base.

10. Procédé de fabrication d'un module solaire (1) selon l'une des revendications 1 à 9, comprenant les étapes suivantes:
• fournir au moins deux lamelles de module solaire (2) présentant chacune une première face plane (3.1), une deuxième face plane (3.2) et une face transversale (4) s'étendant sous un angle par rapport aux première et deuxième faces planes;
• fournir d'un élément de base (5) et d'au moins deux dispositifs de fixation (6), l'élément de base (5) présentant une face avant (7) et une face arrière (8) et les dispositifs de fixation (6) constituant ou comprenant une partie intégrante rigide de l'élément de base (5) ou les dispositifs de fixation (6) constituant ou comprenant une partie intégrante rigide des lamelles de module solaire (2) ou les dispositifs de fixation (6) ou une partie de celles-ci sont reliées de manière rigide ou sont destinées à être reliées de manière rigide à l'élément de base (5) et/ou aux lamelles de modules solaires (2);
• positionnement des lamelles de modules solaires (2) par rapport à l'élément de base (5);
• Fixation des lamelles de module solaire (2) par rapport à l'élément de base à l'aide des dispositifs de fixation (6), les lamelles de module solaire (2) étant fixées en porte-à-faux par rapport à une surface de l'élément de base (5) située sur la face avant (7);
les lamelles de module solaire (2) étant reliés de manière rigide aux dispositifs de fixation (6), les lamelles de module solaire (2) étant fixées uniquement dans une zone (4.1) de la face transversale (4) ou uniquement dans une zone (4.1) de la face transversale (4) et dans une zone (3.4) de la première et/ou de la deuxième face plate immédiatement adjacente à la zone (4.1) de la face transversale (4), ou uniquement dans une zone (3.4) de la première et/ou de la deuxième face plate immédiatement adjacente à la zone (4.1) de la face transversale (4), aux dispositifs de fixation (6).

11. Procédé selon la revendication 10, dans lequel un appui linéaire est créé entre les lamelles de module solaire (2) et les dispositifs de fixation (6).

12. Procédé selon la revendication 10 ou 11, dans lequel les dispositifs de fixation (6) et les liaisons entre les dispositifs de fixation (6) et les lamelles de module solaire (2) ainsi que les liaisons entre les dispositifs de fixation (6) et l'élément de base (5) sont ou sont réalisées de telle sorte que les lamelles de module solaire (2) sont maintenues immobiles les unes par rapport aux autres et par rapport à l'élément de base (5).

13. Procédé selon l'une des revendications 10 à 12, dans lequel les dispositifs de fixation (6) comportent une ouverture de retenue (9), et dans lequel la zone (4.1) de la face transversale (4) des lamelles de module solaire (2) est introduite dans les ouvertures de retenue (9).

14. Procédé selon l'une des revendications 10 à 13, dans lequel, lorsque la lamelle de module solaire (2) est correctement positionnée dans le dispositif de fixation (6) ou dans l'élément de base (5), une connexion conductrice est établie entre le conducteur côté lamelle de module solaire et le conducteur côté dispositif de fixation ou le conducteur côté élément de base.
